(19) Europäisches Patentamt

European Patent Office

Office européen des brevets

(11) Veröffentlichungsnummer: **0 212 077 B1**

(12) **EUROPÄISCHE PATENTSCHRIFT**

(45) Veröffentlichungstag der Patentschrift: **12.08.92**

(21) Anmeldenummer: **86106773.4**

(22) Anmeldetag: **17.05.86**

(51) Int. Cl.⁵: **B23B 13/02**

(54) **Materialstangenzuführvorrichtung.**

(30) Priorität: **10.08.85 DE 3528743**

(43) Veröffentlichungstag der Anmeldung:
**04.03.87 Patentblatt 87/10**

(45) Bekanntmachung des Hinweises auf die
Patenterteilung:
**12.08.92 Patentblatt 92/33**

(84) Benannte Vertragsstaaten:
**AT CH DE FR GB IT LI**

(56) Entgegenhaltungen:
**EP-A- 0 128 419**
**CA-A- 911 861**
**FR-A- 2 437 903**
**US-A- 3 693 810**

(73) Patentinhaber: **Breuning, Kurt**
**Sindelfinger Strasse 9**
**W-7031 Steinenbronn(DE)**

(72) Erfinder: **Breuning, Kurt**
**Sindelfinger Strasse 9**
**W-7031 Steinenbronn(DE)**

(74) Vertreter: **Weller, Wolfgang, Dr. Witte, Weller**
**& Hilgenfeldt Patent- und Rechtsanwälte et**
**al**
**Augustenstrasse 7**
**W-7000 Stuttgart 1(DE)**

## Beschreibung

Die Erfindung betrifft eine Materialstangenzuführvorrichtung zu einer Werkzeugmaschine mit mehreren Stangenführungsrohren für eine zu verarbeitende Materialstange, die aus einem Magazin in eines der Stangenführungsrohre zuführbar ist, wobei jedes Stangenführungsrohr durch zwei im Querschnitt etwa halbkreisförmige Führungshälften gebildet wird und wobei zum Einlegen der Materialstange die eine von der anderen abhebbar ist, und wobei außerdem die eine Führungshälfte am Außenumfang eines um eine Drehachse drehbaren rotationssymmetrischen Tragkörpers und das Magazin parallel unter, neben oder über den Führungshälften angeordnet ist. Eine derartige Materialstangenzuführvorrichtung ist durch die FR-A 24 37 903 bekannt geworden. Sie weist einen zentralen Trägerkörper auf, der gemäß dem Ausführungsbeispiel dieser Druckschrift einen Sechskantquerschnitt besitzt. Jede der Sechskantaußenflächen trägt ein Stangenführungsrohr bzw. -kanal, welches durch zwei voneinander abhebbare Führungshälftenkörper gebildet wird. Die beim Wechseln jeweils unteren Führungshälftenkörper sind fest mit ihrer Vielkantfläche verbunden, während die zugeordneten oberen Führungshälftenkörper drehbar am Trägerkörper gelagert sind. Jeder obere Führungshälftenkörper wird mit einer speziellen Hebevorrichtung angehoben und abgesenkt. Bei einem sechskantförmigen Trägerkörper sind also sechs derartige Hebevorrichtungen notwendig. Diese Materialstangenzuführvorrichtung ist für Stangen gleichen Querschnitts bzw. Durchmessers vorgesehen. Um Materialstangen unterschiedlichen Durchmessers führen zu können, müssten die Führungshälftenkörper hinsichtlich ihrer Anlageflächen entsprechend gestaltet werden. Eine solche Vorrichtung wäre ebenso wie die in der Druckschrift beschriebene durch das Vorsehen der Führungshälftenpaare an der Außenseite des Tragkörpers in den baulichen Abmessungen sehr ausladend und würde wegen der einzelnen Hebevorrichtungen eine entsprechend hohe Zahl von Einzelbauteilen aufweisen. Dadurch wäre sie ebenso wie die in der Druckschrift beschriebene relativ störanfällig und bei fälligen Überholungsarbeiten wäre ggf. der Demontage- und anschließenden Montageaufwand entsprechend hoch.

Durch die DE-PS 804 925 ist eine "Dorn- und Schaftstangen-Führung für Rohrstoßbänke" bekannt geworden. Wesentliche Elemente dieser Führung sind zwei um parallele Achsen drehbare zylindrische Drehkörper, die auf ihrem Umfang segmentförmige Aussparungen aufweisen. Jeweils zwei solcher Aussparungen bilden eine Führung für ein Rohr entsprechenden Durchmessers. Der Achsabstand dieser beiden Drehkörper ist konstant. Infolgedessen können die Rohre nur dadurch eingelegt bzw. entnommen werden, daß man gleichzeitig beide Drehkörper in gegenläufigem Sinne soweit dreht, bis die das Rohr aufnehmenden Aussparungen sich entsprechend weit voneinander entfernt haben. Wenn die Führung auf diese Weise geöffnet wurde, kann ein neuer Dorn in die freigelegte Führungsbahn einfallen.

Die beiden zusammengehörenden Aussparungen müssen so weit voneinander entfernt sein, daß dazwischen noch Platz für die bei der Herstellung benötigte doppel-T-förmige Zahnstange vorhanden ist.

Weil die gattungsbildende Materialstangenführung aus zwei Teilführungshälften bestehende Stangenführungsrohre aufweist, die aber beide an ein und demselben Trägerkörper angebracht sind, ist eine Übertragung irgendwelcher konstruktiver Details aus der DE-PS 804 925 auf die Materialstangenzuführvorrichtung der FR-A 24 37 903 nicht möglich.

Im übrigen liegt für den Fachmann schon deshalb keine Anregung zur Ausbildung der Materialstangenzuführvorrichtung der FR-PS im Sinne der DEPS vor, weil es sich im Falle der DE-PS um eine Bearbeitungsmaschine handelt, während die Materialstangenzuführvorrichtung der FR-PS eine Hilfsvorrichtung zu einer Werkzeugmaschine ist. Aus dem zuletztgenannten Grunde ist es auch notwendig, daß beim Einlegen der Materialstangen in die Zuführvorrichtung eine der beiden Führungshälften, genauergesagt eine untere, feststehend ausgebildet ist und die andere bzw. obere ihr gegenüber abgehoben werden kann. Dies gewährleistet, daß die Materialstange auch bei geöffneter Führung gegenüber der nachfolgenden Werkzeugmaschine stets korrekt ausgerichtet ist und es im Störungsfalle auch bleibt. Eine Materialstangenzuführvorrichtung bei welcher die Führungshälften zum Öffnen aus der Arbeitsebene herausgehoben werden müssen ist demzufolge nicht brauchbar.

Es liegt infolgedessen die Aufgabe vor, eine Materialstangenzuführvorrichtung der eingangs genannten Art so weiterzubilden, daß unter Beibehaltung des Öffnungsprinzips der Aufbau wesentlich vereinfacht wird und dabei die Verwendung für Materialstangen unterschiedlichen Durchmessers möglich ist, wobei der Aufwand hinsichtlich der benötigten Vorrichtungsteile zur Bildung von durchmesserangepassten Stangenführungsrohren erheblich reduziert und die Zuverlässigkeit sowie die Wartungsfreundlichkeit verbessert sind.

Zur Lösung dieser Aufgabe wird erfindungsgemäß vorgeschlagen, daß die Materialstangenzuführvorrichtung nach dem Oberbegriff des Anspruchs 1 entsprechend dem kennzeichnenden Teil dieses Anspruchs ausgebildet ist. Diese Vorrichtung ermöglicht in der verlangten Weise die Zuführung von Materialstangen unterschiedlichen Durchmessers zu einer Werkzeugmaschine. Beim Einlegen der Materialstange ist diese gegenüber der Werkzeugaufnahme bereits korrekt ausgerichtet, weil beim Öffnen des Stangenführungsrohrs in bekannter Art die untere Führungshälfte ihre Lage beibehält und nur die obere Führungshälfte soweit abgehoben werden muß, daß die Materialstange eingelegt werden kann. Das Abheben erfolgt in einfacher Weise indem man den ganzen Trägerkörper hochhebt. Dadurch ist es möglich, daß mit ein und derselben Hubvorrichtung sämtliche Materialführungen geöffnet und geschlossen werden können und der bisher notwendige separate Hubantrieb für jede obere Führungshälfte entfällt. Die Materialstangenzuführvorrichtung ist auch leicht auf einen anderen Stangenquerschnitt umzustellen. Auch hierbei kann man sich das Anheben des oberen Trägerkörpers zunutze machen. Während er in abgesenkter Stellung eine das Material rings eng umfassende Führung bildet, gestattet er in der angehobenen Stellung die Drehung beider Trägerkörper in die nächste gewünschte Arbeitsstellung.

Zur rationalen Herstellung von Materialstangenzuführvorrichtungen unterschiedlicher Längen entsprechend den Anforderungen an die Längen der zuzuführenden Materialstangen können die beiden Führungshälften in sehr vorteilhafter Weise in ihrer Länge aus mehreren mit Zwischenabstand fluchtend hintereinander angeordneten Teilführungshälften durch Aneinanderreihung mehrerer Tragkörper zusammengesetzt sein. Desweiteren ist es sehr vorteilhaft, daß die beiden Trägerkörper einen Vielkantquerschnitt, vorzugsweise einen Sechs- oder Achtkantquerschnitt, aufweisen, und daß an jeder Vielkantflächen eine im Querschnitt etwa halbkreisförmige Teilführungshälfte aber mit unterschiedlichem Radius vorgesehen ist.

Eine weitere Ausgestaltung der Erfindung ergibt sich aus Anspruch 4. Man erreicht dadurch auch für lange Materialstangen eine exakte Führung. Außerdem können zum Stangeneinlegen alle oberen Trägerkörper gleichzeitig gemeinsam angehoben und abgesenkt werden.

Eine exakte linerare durchhangsfreie Führung der Materialstangen ist in vorteilhafter Weise dadurch gewährleistet, daß die Lagerwellen mehrfach gelagert sind, wobei die Lagerung in den Zwischenräumen zwischen den Tragkörpern erfolgt.

Eine weitere Variante ist Anspruch 6 entnehmbar. Anspruch 7 beinhaltet eine weitere bevorzugte Ausbildung der Vorrichtung, welche bei der Handhabung längerer Materialstangen zweckmäßig ist.

Zur sicheren Schmierung und gleichzeitig auch zur Geräuschdämpfung wird eine Ausbildung der Vorrichtung gemäß Anspruch 8 vorgeschlagen. Das aus den einzelnen Trägerkörpern austretende Schmiermittel muß hierbei nicht jeweils besonders aufgefangen und zurücktransportiert werden.

Eine für den Weitertransport der Materialstange an die Werkzeugmaschine besonders vorteilhafte Ausgestaltung ergibt sich aus Anspruch 9.

Eine besonders bevorzugte Ausführungsform der Vorrichtung ist im Anspruch 10 beschrieben. Hierdurch ist eine Umstellung auf einen anderen Stangendurchmesser trotz des Transportmittels leicht möglich. Außerdem bleibt die günstige Schmiermittelzuführung erhalten.

Eine Weiterbildung der Vorrichtung ergibt sich aus Anspruch 12. Sie gewährleistet das sichere Einlegen der Materialstange in die untere Führungshälfte bzw. einen Teil der unteren Teilführungshälften. Das Einlegen wird in Verbindung mit einem Exzenter besonderes exakt durchgeführt.

Eine andere Ausgestaltung der Erfindung ist Anspruch 14 entnehmbar. Sie gewährleistet, daß automatisch jeweils der erforderliche Materialschieber zur Verfügung steht.

Eine konstruktiv besonderes gute Anpassung erreicht man bei einer Ausbildung der Vorrichtung gemäß Anspruch 15. Eine in dieser Hinsicht zweckmäßige Weiterbildung der Vorrichtung ist im Anspruch 16 beschrieben. Die Vorrichtung ist desweiteren in sehr zweckmäßiger Art gemäß Anspruch 17 weitergebildet.

Der die Aufnahmen tragende Formkörper ist in bevorzugter Weise entsprechend den unteren Tragkörpern zwischen Konsolen gelagert, wobei der Formkörper mit den Trägerkörpern synchron drehgekoppelt ist, insbesondere über gemeinsam angetriebene Kettentriebe.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1    einen Querschnitt durch eine Materialstangenzuführvorrichtung,

Figur 2    einen Teilausschnitt im Bereich zweier aufeinander gesetzter Führungshälften in größerem Maßstab,

Figur 3    einen Teilschnitt entsprechen der Linie III in Fig. 2 die Transportmittelführung und dessen Kopplung mit einem Materialschieber zeigend,

Figur 4    eine Teilseitenansicht eines Magazins, in Richtung des Pfeils IV in Fig. 1 in größerem Maßstab,

Figur 5    eine Ansicht eines Materialschiebermagazins und

Figur 6    eine Seitenansicht in Richtung des Pfeils VI des Materialschiebermagazins.

In einem Schmiermittelsammelbehälter 1 sind auf einem Längsträger 2 im Abstand mehrere Konsolen 3, 4, 5 hintereinander angeordnet. Mittels der mittleren Konsolen 4 ist eine durchgehende Lagerwelle 6 drehbar gelagert, auf der drehfest zwischen den einzelnen Konsolen 4 untere Trägerkörper 7 gehalten sind. Jeder dieser Trägerkörper 7 hat eine Länge von etwa 600 mm. Alle sind identisch gleich aus massivem Kunststoff hergestellt und haben im Ausführungsbeispiel einen Achtkantquerschnitt. Auf jeder Fläche dieses Achtkantquerschnitts ist eine Teilführungshälfte 8 mit unterschiedlichem Halbkreisquerschnitt an gleicher Stelle angeordnet. Weiter ist neben jeder Teilführungshälfte 8 eine Führungsaussparung 9 für ein Transportmittel 10 vorgesehen, durch das ein nicht näher dargestellter in die oben befindliche Teilführungshälfte 8 ragender Materialschieber entlang der Teilführungshälfte 8 bewegbar ist.

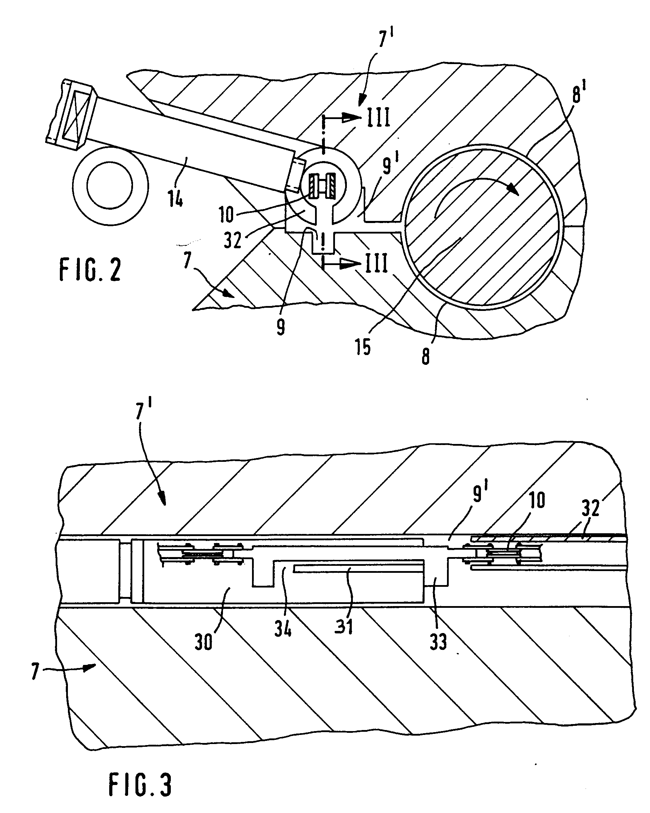

An den Konsolen 3 ist jeweils ein Schwenkarm 11 über einen Arbeitszylinder 12 schwenkbar angelenkt in dessem freien Armende eine weitere Lagerwelle 13 heb- und senkbar geführt ist. Auf dieser weiteren Lagerwelle 13 sind zwischen den Schwenkarmen 11 identische obere Trägerkörper 7' ebenfalls drehfest getragen, die identische Teilführungshälften 8' aufweisen. Die Führungsaussparungen 9' sind, um Platz für das Transportmittel 10 zu schaffen, größer ausgebildet als bei den unteren Trägerkörpern 7, wie dies in Figur 2 in wesentlich größerem Maßstab ersichtlich ist.

Um beim Drehen der Trägerkörper 7, 7' nicht mit dem Transportmittel 10 in Konflikt zu kommen ist dieses über eine doppelarmige Hebel 29 aufweisende Hubvorrichtung mittels Arbeitszylinder 27 abhebbar.

Das Transportmittel 10 ist in, im Abstand etwa mittig jeweils in einen der oberen Trägerkörper 7' ragenden, Führungsarmen 14 geführt. Diese Führungsarme 14 sind hohl ausgebildet und es kann durch sie ein Schmiermittel zugeführt werden, das über die Führungsaussparungen 9, 9' in die Teilführungshalften 8, 8' fließen kann. In den einzelnen Teilführungshalften 8, 8' ist eine einer Werkzeugmaschine zuzuführende Materialstange 15, wie weiter unten näher beschrieben wird, durch einen Materialschieber 30 zur Werkzeugmaschine hin verschiebbar geführt, wobei durch das zugeführte Schmiermittel auch bei hoher Drehzahl ein Schlagen der Materialstange 15 verhindert wird, bei gleichzeitiger guter Geräuschdämpfung.

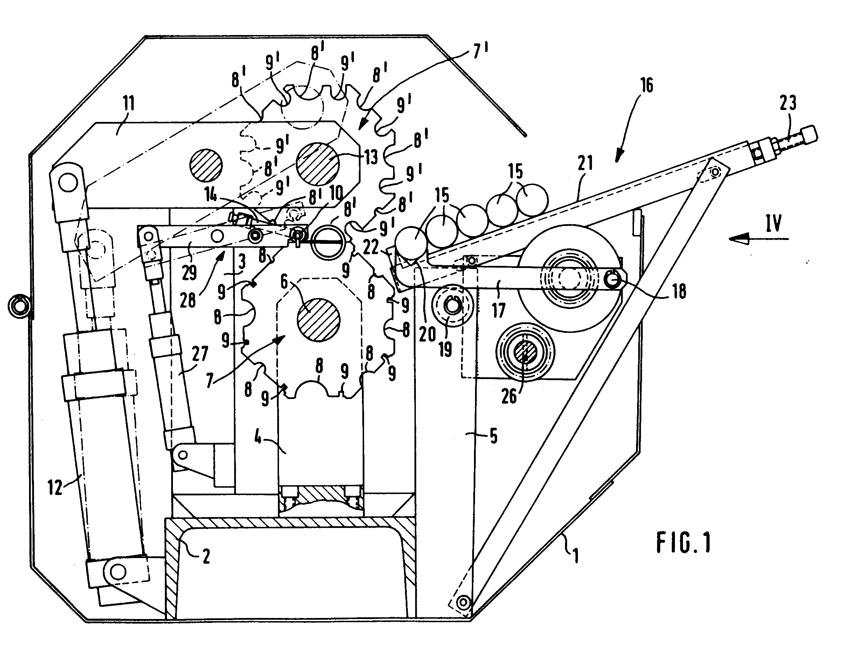

Zur Einführung einer neuen Materialstange 15 können über die Arbeitszylinder 12 und die Schwenkarme 11 die oberen Trägerkörper 7' wie in Fig. 1 strichpunktiert angedeutet ist hochgehoben werden, so daß dann die Teilführungshälften 8, 8' voneinander abgehoben, offen sind für die Aufnahme der neuen Materialstange 15, die von einem neben dem Längsträger 2 parallel zu diesem angeordneten Magazin 16 entnommen wird. Dieses Magazin 16 weist die Konsolen 5 auf, an denen im Abstand entsprechend der Länge der Materialstangen 15 mehrere Einlegearme 17 über gleichlaufende Exzenter 18 entlang Führungsrollen 19 bewegbar sind. Die Enden der Einlegearme 17 sind abgewinkelt und mit einer nach oben offenen V-Aussparung 20 für die Aufnahme einer einzigen Materialstange 15 versehen. In Fig. 1 ist die Ruhelage eine Einlegearms 17 dargestellt. Die unterste Materialstange 15 liegt in der V-Aussparung und an am unteren Ende der Magazinfläche 21 angeordneten Endanschlägen 22 an. Zur Anpassung an unterschiedliche Durchmesser der Materialstangen 15 können die Endanschläge 22 über Einstellvorrichtungen 23 so eingestellt werden, daß jeweils nur eine einzige Materialstange 15 in die V-Aussparung 20 hineinrollen kann.

Der Abstand der V-Aussparung 20 der Einlegearme 17 in der Ruhestellung von den Teilführungshälften 8 entspricht genau dem Exzenterhub. Durch die entsprechende Anordnung der Führungsrollen 19 wird beim synchronen Drehen der Exzenter 18 die V-Aussparung 20 mit der Materialstange 15 in einer etwa kreisbogenförmigen Bewegung von oben her in die Teilführungshälften 8' eingelegt. Die Einlegearme 17 werden dabei stirnseitig an den unteren Trägerkörpern 7 vorbeigeführt.

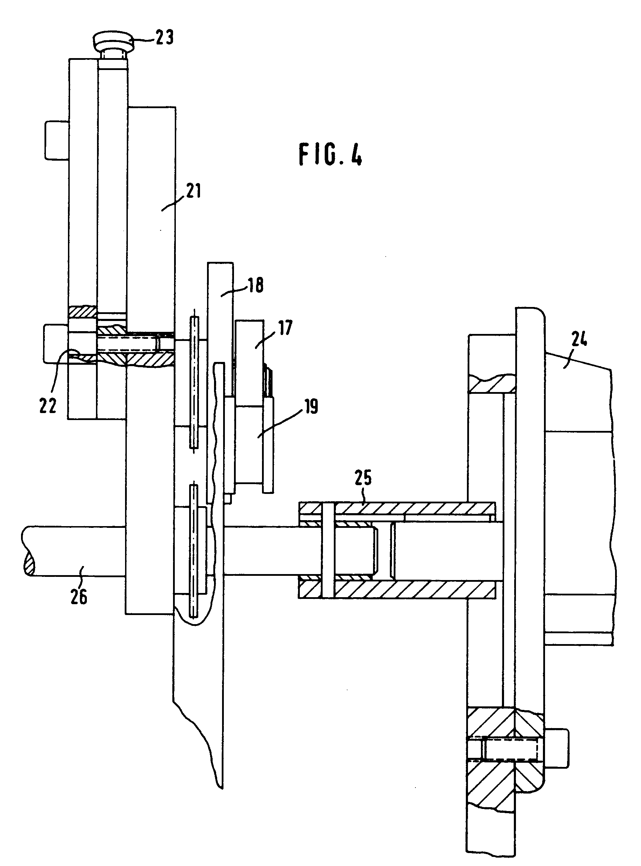

Zum synchronen Antrieb der Exzenter 18 ist eine über einen Getriebemotor 24 über eine Kupplung 25 angetriebene Antriebswelle 26 vorgesehen, die parallel zum Längsträger 2 verläuft, wie dies in Fig. 4 erkennbar ist.

Je nach der Länge der zu verarbeitenden Materialstangen 15 können mehr oder weniger viele Trägerkörper 7, 7' auf dem Längsträger 2 angeordnet sein und zwar in Form von identisch ausgebildeten Baueinheiten, so daß ein Aufbau im Baukastenprinzip möglich ist. Entsprechend kann auch das Magazin 16 aus mehreren im Abstand angeordneten Baueinheiten zusammengesetzt sein, wobei die Anzahl der Baueinheiten des Magazins 16 nicht der Anzahl der Baueinheiten der Trägerkörper 7, 7' entsprechen muß.

Wie aus den Fig. 2, 3 und 6 ersichtlich, weist der Materialschieber 30 eine Blechfahne 31 auf, die in die Führungsaussparung 9 hineinragt und in einer Nut 44 geführt ist. Das Transportmittel 10, eine umlaufende Kette ist in am Ende der Führungsarme 14 angeordneten geschlitzten Rohren 32 geführt. In der Kette des Transportmittels 10 ist ein unten aus dem geschlitzten Rohr 32 ragender Mitnehmer 33 angeordnet, der nur in Fig. 3 dargestellt ist. Dieser Mitnehmer 33 weist eine U-förmige Aussparung 34 auf, in der die Blechfahne 31 des Materialschiebers aufgenommen ist. Wie weiter oben beschrieben, kann das Transportmittel 10 mit dem Mitnehmer 33 zusammen mit dem Lagerkörper 7' nach oben abgehoben werden, so daß dann das Transportmittel 10 und der Materialschieber 30 entkoppelt sind.

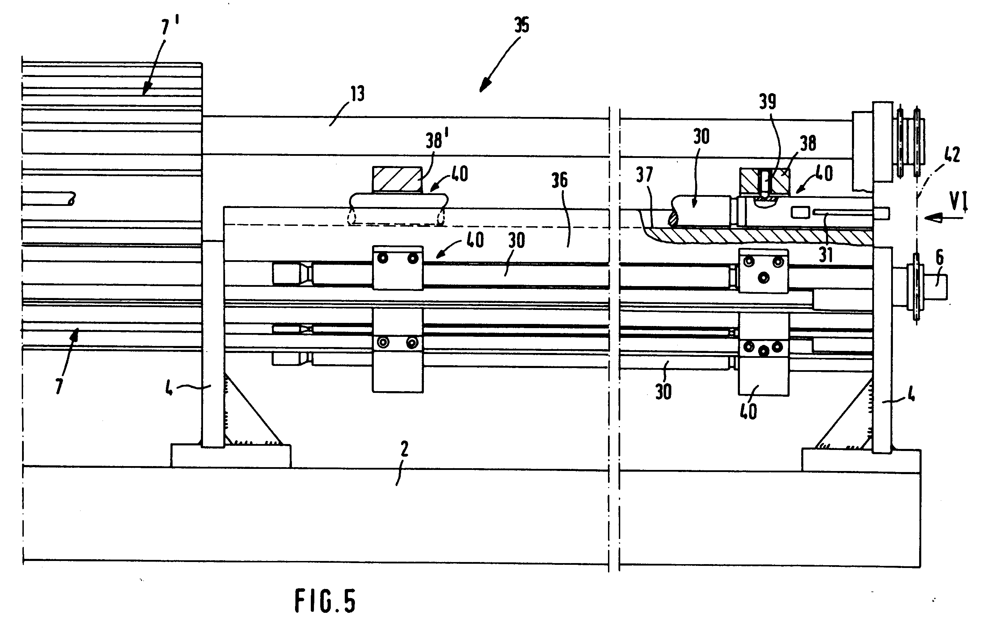

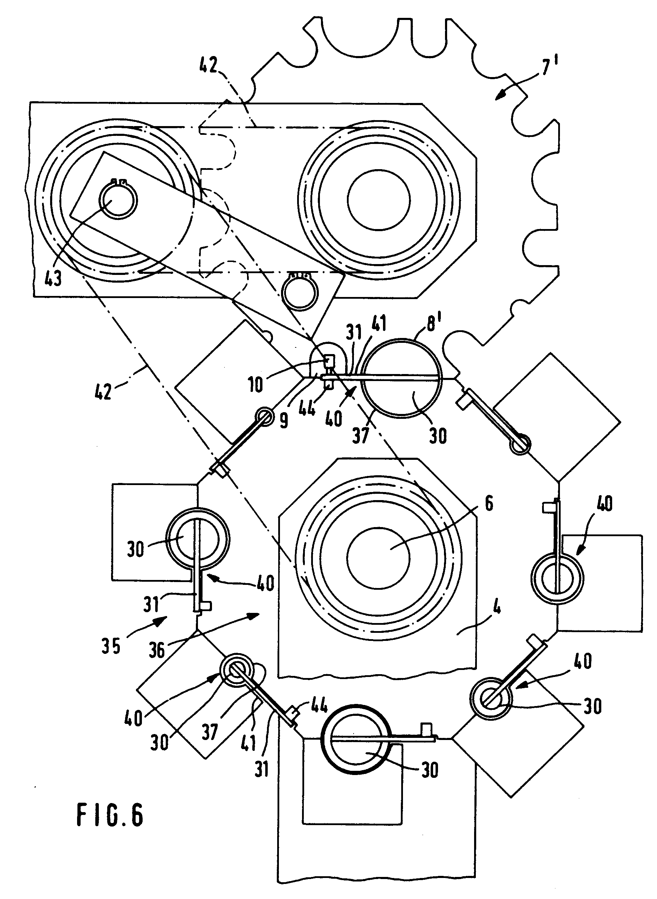

Zur Bearbeitung von Materialstangen 15 unterschiedlichen Durchmessers sind am Umfang der Trägerkörper 7, 7' unterschiedlich ausgebildete Teilführungshälften 8, 8' vorsehen. In Verlängerung der unteren Trägerkörper 7 ist nun ein Materialschiebermagazin 35 ebenfalls zwischen Konsolen 4 synchron mit dem Trägerkörper 7 drehbar gelagert. Jeder Teilführungshälfte 8 zugeordnet ist, in dem dem Trägerkörper 7 entsprechenden Formkörper 36 des Materialschiebermagazins 35, eine Schieberführungshälfte 37 für den jeweils zugeordneten Materialschieber 30 vorgesehen. Die Materialschieber 30 sind in ihrer Ruhestellung wie in den Fig. 5 und 6 dargestellt durch jeweils zwei Halter 38, 38' gehalten, wobei im jeweiligen Halter 38 ein federbelasteter Rastbolzen 39 vorgesehen ist, der in einer entsprechenden Vertiefung des jeweiligen Materialschiebers 30 in der Ruhestellung eingerastet ist. Auch zwischen den Führungshälften 37 und den Haltern 38, die zusammen jeweils eine Aufnahme 40 für einen Materialschieber 30 bilden ist ein Schlitz 41 für die jeweilige Blechfahne 31 des Materialschieber 30 gebildet.

Wie aus den Fig. 5 und 6 ersichtlich, sind zur synchronen Drehung sowohl der Trägerkörper 7, 7' als auch des Formkörpers 36 des Materialschiebermagazins 35 alle diese Körper 7, 7', 36 über Kettentriebe 42 mit einer gemeinsammen Antriebswelle 43 gekoppelt, die aber nur antreibbar ist, wenn die Trägerkörper 7' von den Trägerkörpern 7 abgehoben sind, um so die Materialstangenzuführvorrichtung für einen anderen Materialstangendurchmesser einzurichten. Mit dem Verdrehen und wieder Absenken der Trägerkörper 7 wird automatisch der zugeordnete Materialschieber 30 mit dem Transportmittel 10 gekoppelt.

**Patentansprüche**

1. Materialstangenzuführvorrichtung zu einer Werkzeugmaschine mit mehreren Stangenführungsrohren für eine zu verarbeitende Materialstange (15), die aus einem Magazin (16) in eines der Stangenführungsrohre zuführbar ist, wobei jedes Stangenführungsrohr durch zwei im Querschnitt etwa halbkreisförmige Führungshälften (8,8') gebildet wird, und wobei zum Einlegen der Materialstange (15) eine erste Führungshälfte (8') von der zweiten Führungshälfte (8) abhebbar ist, und wobei außerdem die zweite Führungshälfte (8) am Außenumfang eines um eine Drehachse (6) drehbaren rotationssymmetrischen ersten Trägerkörpers (7) und das Magazin (16) parallel unter, neben oder über den Führungshälften angeordnet ist, **dadurch gekennzeichnet,** daß ein zweiter rotationssymmetrischer Trägerkörper (7') vorgesehen ist, dessen Längsachse parallel im Abstand oberhalb derjenigen des ersten Trägerkörpers (7) angeordnet ist, und daß beide Trägerkörper (7,7') jeweils mehrere, in Längsachsenrichtung verlaufende, am Umfang angeordnete, Führungshälften (8,8') mit unterschiedlichem Durchmesser aufweisen, wobei Anzahl und Querschnitte der Führungshälften (8,8') auf beiden Trägerkörpern (7,7') gleich sind, daß außerdem der eine Trägerkörper (7') vom anderen (7) abhebbar ist, und abgehoben die Trägerkörper (7,7') synchron sowie vorzugsweise in entgegengesetzter Drehrichtung zueinander drehbar sind, so daß bei Aneinanderliegen von durchmessergleichen, vorgewählten Führungshälften (8,8') ein Stangenführungsrohr für einen gewählten Materialstangendurchmesser gebildet ist.

2. Vorrichtung nach Anspruch 1, dadurch gekennzeichnet, daß zur Bildung eines längeren Stangenführungsrohres die beiden Führungshälften in ihrer Länge aus mehreren mit Zwischenabstand fluchtend hintereinander angeordneten Teilführungshälften (8,8') durch Aneinanderreihung mehrerer Trägerkörper (7,7') zusammengesetzt sind.

3. Vorrichtung nach Anspruch 1 oder 2, dadurch gekennzeichnet, daß beide Trägerkörper (7,7') einen Vielkantquerschnitt, vorzugsweise einen Sechs- oder Achtkantquerschnitt aufweisen, und daß an jeder der Vielkantflächen eine im Querschnitt etwa halbkreisförmige Teilführungshälfte (8,8') aber mit unterschiedlichem Radius vorgesehen ist.

4. Vorrichtung nach einem der Ansprüche 1 bis 3, dadurch gekennzeichnet, daß fluchtend zueinander mehrere Trägerkörper (7,7') auf zwei vorzugsweise durchgehenden, in der Trägerkörperlängsachse verlaufenden Lagerwellen (6,13) mit Zwischenabstand drehfest angeordnet sind, wodurch die auf den jeweiligen Lagerwellen (6,13) befindlichen Trägerkörper (7,7') gemeinsam drehbar sind und durch die Veränderung des Lagerwellenabstandes die Trägerkörper (7,7') voneinander abhebbar sind.

5. Vorrichtung nach Anspruch 4, dadurch gekennzeichnet, daß die Lagerwellen (6,13) mehrfach gelagert sind, wobei die Lagerung in den Zwischenräumen zwischen den Trägerkörpern (7,7') erfolgt.

6. Vorrichtung nach Anspruch 4 oder 5, dadurch gekennzeichnet, daß die eine Lagerwelle (6) axial und radial unverschiebbar in Lagerstellen mindestens zweier Konsolen (4) aufgenommen ist, und die andere, abhebbare Lagerwelle (13) axial und radial unverschiebbar in Lagerstellen jeweils am Ende mindestens zweier Hub- oder Schwenkarme (11) aufgeommen ist, und daß die Hub- oder Schwenkarme (11) jeweils an einer Konsole (3) schwenkbar gelagert und vorzugsweise über hydraulische oder pneumatische Arbeitszylinder (12) gemeinsam bewegbar sind.

7. Vorrichtung nach einem der Ansprüche 4 bis 6, dadurch gekennzeichnet, daß zur Bildung einer Vorrichtung für längere Materialstangen (15) ein Längsträger (12) vorgesehen ist, auf dem mehrere Konsolen (3,4) zur Lagerung und Bewegung der Lagerwellen (6,13) angeordnet sind, wobei die Lagerwellen (6,13) jeweils mehrere hintereinander angeordnete Trägerkörper (7,71) aufweisen.

8. Vorrichtung nach Anspruch 7, dadurch gekennzeichnet, daß der Längsträger (2) mit den Konsolen (3,4), den Arbeitszylindern (12,27) und den Trägerkörpen (7,7'), sowie mindestens einem Teil des Magazins (16) mit zugehörigen Konsolen (5) in einer Schmiermittelsammelwanne (1) angeordnet sind.

9. Vorrichtung nach einem der Ansprüche 1 bis 8, dadurch gekennzeichnet, daß parallel zu den im Querschnitt halbkreisförmigen Teilführungshälften (8,8') jeweils eine Führungsaussparung (9,9') für ein flexibles Transportmittel (10) vorgesehen ist, und daß das Transportmittel (10) einen Mitnehmer (33) aufweist, der mit einem zum Vorschub der Materialstangen (15) im Stangenführungsrohr verlaufenden Materialschieber (30) selbstätig koppel- und entkoppelbar ist.

10. Vorrichtung nach Anspruch 9, dadurch gekennzeichnet, daß das Transportmittel (10) durch eine Hubvorrichtung (28) von den unteren Trägerkörpern (7) abhebbar ist, daß das Transportmittel (10) hierzu in geschlitzten Rohren (32) geführt ist, die am Ende von im Abstand zueinander angeordneten, hohl ausgebildeten Führungsarmen (14) vorgesehen sind, die gleichzeitig als Schmiermittelzuführung dienen, daß ferner mindestens zwei doppelarmige Hebel (29) vorgesehen sind, deren eines Ende mit einem Arbeitszylinder (27) verbunden ist und deren anderes Ende einen Führungsarm (14) trägt bzw. abgibt, und daß die doppelarmigen Hebel (29) insbesondere an den Konsolen (3) schwenkbar gelagert sind.

11. Vorrichtung nach einem der Ansprüche 1 bis 10, dadurch gekennzeichnet, daß die Trägerkörper (7,7') aus Kunststoff bestehen, und daß die Trägerkörper (7,7') jeweils eine Länge von etwa 60 cm aufweisen.

12. Vorrichtung nach einem der Ansprüche 1 bis 11, dadurch gekennzeichnet, daß das Magazin (16) mindestens zwei im Abstand parallel zueinander angeordnete Einlegearme (17) aufweist, daß die Einlegearme (17) durch jeweils einen Exzenter (18) über eine gemeinsame Antriebswelle (26) bewegbar sind, daß ferner jeder Einlegearm (17) auf einer etwa mittig zwischen den unteren Trägerkörpern (7) und dem Exzenter (18) gelagerten Führungsrolle (19) verschiebbar geführt ist, und daß die Einlegearme (17) mit ihren eine Materialestange (15) aufnehmbaren Enden in einer etwa kreisförmigen Bewegung stirnseitig an den unteren Trägerkörpern (7) vorbeiführbar sind und somit eine Materialstange (15) von ober her in die untere Teilführungshälften (8) einlegbar ist.

13. Vorrichtung nach Anspruch 12, dadurch gekennzeichnet, daß das Magazin (16) eine geneigte Magazinfläche (21) für mehrere Materialstangen (15) mit einem Endanschlag (22) für die unterste Materialstange (15) aufweist, daß mindestens zwei einzelne Endanschläge (22) im Bereich der Einlegearme (17) vorgesehen sind, und daß diese Endanschläge (22) zur Anpassung für unterschiedliche Materialstangendurchmesser parallel zur Magazinfläche (21) verstellbar sind.

14. Vorrichtung nach einem der Ansprüche 1 bis 13, dadurch gekennzeichnet, daß in Verlängerung zum durch die Teilführungshälften (8,8') gebildeten Stangenführungsrohr ein Materialschiebermagazin (35) mit Materialschiebern (30) für den Vorschub von Materialstangen (15) unterschiedlicher Durchmesser vorgesehen ist, und daß im Materialschiebermagazin (35) eine der Anzahl der Führungshälften (8,8') eines Trägerkörpers (7,7') entsprechende Anzahl von Materialschiebern (30) vorhanden sind.

15. Vorrichtung nach Anspruch 14, dadurch gekennzeichnet, daß das Materialschiebermagazin (35) einen dem unteren Trägerkörper (7) entsprechenden Formkörper (36) mit Vielkantquerschnitt aufweist, daß an jeder Vielkantfläche eine mit der jeweiligen Teilführungshälfte (8) fluchtende Aufnahme (40) für einen Materialschieber (30) vorgesehen ist, und daß die jeweilige Aufnahme (40) durch eine im Querschnitt etwa halbkreisförmige Schieberführungshälfte (37) und mindestens einen Halter (38,38') gebildet ist, wobei insbesondere zwischen der Schieberführungshälfte (37) und dem Halter (38,38') ein Schlitz (41) für eine Blechfahne (31) des Materialschiebers (30) vorgesehen ist.

16. Vorrichtung nach Anspruch 15, dadurch gekennzeichnet, daß die Blechfahne (31) des mit der gerade zu bewegenden Materialstange (15) zusammenwirkenden Materialschiebers (30) in Eingriff mit dem Transportmittel (10) bringbar ist, wobei der Eingriff über eine Aussparung - Vorsprung - Anordnung erfolgt, insbesondere gebildet durch eine Aussparung in einem Kettenglied oder einem Mitnehmer (33) des Transportmittels (10) und einem Vorsprung der Blechfahne (31) oder umgekehrt.

17. Vorrichtung nach einem der Ansprüche 14 bis 16, dadurch gekennzeichnet, daß für jede Teilführungshälfte (8) des unteren Trägerkörpers (7) ein dem Durchmesser der zu fördernden Materialstange (15) angepasster Materialschieber (30) am Formkörper (36) vorgesehen ist, daß bei einem Durchmesserwechsel der zu fördernden Materialstange (15) durchmesserzugeordnete Teilführungshälften (8,8') durch abheben der oberen Trägerkörper (7'), verdrehen der unteren und oberen Trägerkörper (7,7') und wiederabsenken der oberen Trägerkörper (7') ein dem Durchmesser der Materialstange (15) angepaßtes Stangenführungsrohr bilden und entsprechend auch die den passenden Materialschieber (30) tragende Aufnahme (40) des Formkörpers (36) in die entsprechende fluchtende Stellung zum Stangenführungsrohr gebracht wird, und daß beim aneinanderlegen der Trägerkörper (7,7') der zugeordnete Materialschieber (30) mit dem Transportmittel (10) selbsttätig gekoppelt ist.

18. Vorrichtung nach einem der Ansprüche 14 bis 17, dadurch gekennzeichnet, daß der die Aufnahmen (40) tragende Formkörper (36) entsprechend den unteren Trägerkörpern (7) zwischen Konsolen (4) gelagert ist, und daß der Formkörper (36) mit den Trägerkörpern (7,7') synchron drehgekoppelt ist, insbesondere über gemeinsam angetriebene Kettentriebe (42).

19. Vorrichtung nach Anspruch 9 und 15, dadurch gekennzeichnet, daß die untere Trägerkörper (7) und der entsprechend ausgebildete Formkörper (36) in ihren Führungsaussparungen (9) jeweils eine Nut (44) für das untere freie Ende des Mitnehmers (33) aufweisen.

20. Vorrichtung nach Anspruch 15, dadurch gekennzeichnet, daß die Materialschieber (30) in ihrer Ruhelage im Werkstoffschiebermagazin (35) durch einen federbelasteten in einer Ausnehmung des Materialschiebers (30) einrastenden Rastbolzen (39) lagegesichert sind.

**Claims**

1. Material rod feed device to a machine tool having a plurality of rod guide tubes for a material rod (15) to be processed, which can be fed from a magazine (16) into one of the rod guide tubes, each rod guide tube being formed by two guide-halves (8, 8') of approximately semi-circular cross-section and, for the insertion of the material rod (15), a first guide-half (8') being raisable from the second guide-half (8) and, furthermore, the second guide-half (8) being disposed on the outer periphery of a rotationally symmetrical first support element (7), rotatable about a rotational axis (6), and the magazine (16) being disposed in parallel below, beside or above the guide-halves, characterised in that a second rotationally symmetrical support element (7') is provided, the longitudinal axis of which is disposed in parallel at a distance above that of the first support element (7), and in that both support elements (7, 7') respectively exhibit a plurality of guide-halves (8, 8') of different diameter, running in the direction of the longitudinal axis and disposed on the periphery, the number and cross-sections of the guide-halves (8, 8') being the same on both support elements (7, 7'), in that, in addition, one support element (7') can be raised from the other one (7) and, in the raised state, the support elements (7, 7') can be rotated synchronously and preferably in opposite directions of rotation to one another, so that, when equal-diameter, pre-selected guide-halves (8, 8') bear against each other, a rod guide tube for a selected material rod diameter is formed.

2. Device according to Claim 1, characterised in that, for the formation of a longer rod guide tube, the two guide-halves are made up in their length from a plurality of part guide-halves (8, 8') disposed in alignment behind one another at intermediate intervals by connecting together a plurality of support elements (7, 7') in series.

3. Device according to Claim 1 or 2, characterised in that both support elements (7, 7') exhibit a polyhedral cross-section, preferably a hexagonal or octagonal cross-section, and in that a part guide-half (8', 8') of approximately semi-circular cross-section yet of varying radius is provided on each of the polyhedral surfaces.

4. Device according to one of Claims 1 to 3, characterised in that, in mutual alignment, a plurality of support elements (7, 7') are disposed at intermediate intervals, in a rotationally secure manner on two preferably continuous bearing shafts (6, 13) running along the support element longitudinal axis, as a result of which the support elements (7, 7') located on the respective bearing shafts (6, 13) are jointly rotatable and, by changing the bearing-shaft spacing, the support elements (7, 7') can be raised from one another.

5. Device according to Claim 4, characterised in that the bearing shafts (6, 13) are multi-mounted, the mounting being carried out in the interstices between the support elements (7, 7').

6. Device according to Claim 4 or 5, characterised in that the one bearing shaft (6) is received, in an axially and radially non-displaceable manner, in bearings of at least two brackets (4) and in that the other, raisable bearing shaft (13) is received, in an axially and radially non-displaceable manner, in bearings at the end, respectively, of at least two lifting or swivel arms (11), and in that the lifting or swivel arms (11) are in each case pivotably mounted on a bracket (3) and, preferably, are jointly movable by means of hydraulic or pneumatic working cylinders (12).

7. Device according to one of Claims 4 to 6, characterised in that, to form a device for longer material rods (15), a longitudinal support (12) is provided, on which a plurality of brackets (3, 4) are disposed for the mounting and movement of the bearing shafts (6, 13), the bearing shafts (6, 13) in each case exhibiting a plurality of support elements (7, 7') disposed behind one another.

8. Device according to Claim 7, characterised in that the longitudinal support (2), together with the brackets (3, 4), the working cylinders (12, 27) and the support elements (7, 7'), and at least part of the magazine (16) with associated brackets (5), are disposed in a lubricant sump (1).

9. Device according to one of Claims 1 to 8, characterised in that a guide recess (9, 9') is in each case provided, parallel to the part guide-halves (8, 8') of semi-circular cross-section, for a flexible transport means (10) and in that the transport means (10) exhibits a dog (33), which can be automatically coupled and decoupled by means of a material slide (30) advancing, for the material rods (15), which runs in the rod guide tube.

10. Device according to Claim 9, characterised in that the transport means (10) can be raised by a lifting device (28) from the lower support elements (7), in that the transport means (10) is guided, for this purpose, in slotted tubes (32) provided at the end of hollow guide arms (14) which are spaced apart from one another and which simultaneously serve as a lubricant feed, in that at least two double-armed levers (29) are also provided, one end of which is connected to a working cylinder (27) and the other end of which supports or releases a guide arm (14), and in that the double-armed levers (29), in particular, are pivotably mounted on the brackets (3).

11. Device according to one of Claims 1 to 10, characterised in that the support elements (7, 7') are made of plastic and in that the support elements (7, 7') in each case exhibit a length of approximately 60 cm.

12. Device according to one of Claims 1 to 11, characterised in that the magazine (16) exhibits at least two insertion arms (17) disposed at a distance parallel to one another, in that the insertion arms (17) can in each case be moved by an eccentric (18) via a joint drive shaft (26), in that, furthermore, each insertion arm (17) is displaceably guided on a guide roller (19) mounted approximately centrally between the lower support elements (7) and the eccentric (18), and in that the insertion arms (17) can be guided in an approximately circular movement, by means of their ends capable of receiving a material rod (15), past the lower support elements (7) on their face side, thereby enabling a material rod (15) to be inserted from above into the lower part guide-halves (8).

13. Device according to Claim 12, characterised in that the magazine (16) exhibits an inclined magazine surface (21) for a plurality of material rods (15), having an end stop (22) for the lowermost material rod (15), in that at least two individual end stops (22) are provided in the area of the insertion arms (17) and in that these end stops (22) are adjustable parallel to the magazine surface (21) for adaptation to different material rod diameters.

14. Device according to one of Claims 1 to 13, characterised in that, as an extension to the rod guide tube formed by the part guide-halves (8, 8'), a material slide magazine (35) is provided having material slides (30) for advancing material rods (15) of different diameters, and in that a number of material slides (30) corresponding to the number of guide-halves (8, 8') of a support element (7, 7') are present in the material slide magazine (35).

15. Device according to Claim 14, characterised in that the material slide magazine (35) exhibits a moulded element (36) of polyhedral cross-section, corresponding to the lower support element (7), in that on each polyhedral surface, a holding fixture (40) is provided for a material slide (30), arranged in alignment with the respective part guide-half (8), and in that the respective holding fixture (40) is formed by a slide guide-half (37) of approximately semi-circular cross-section and at least one holder (38, 38'), there being provided, in particular, between the slide guide-half (37) and the holder (38, 38'), a slot (41) for a metal flag (31) of the material slide (30).

16. Device according to Claim 15, characterised in that the metal flag (31) of the material slide (30) interacting with the material rod (15) just about to be moved can be brought into engagement with the transport means (10), the engagement being effected via a recess-projection arrangement, formed, in particular, by a recess in a chain link or a dog (33) of the transport means (10) and a projection of the metal flag (31) or vice versa.

17. Device according to one of Claims 14 to 16, characterised in that, for each magazine guide-half (8) of the lower support element (7), there is provided on the moulded element (36) a material slide (30) adapted to the diameter of the material rod (15) to be conveyed, in that, where there is a change of diameter in the material rod (15) to be conveyed, diameter-assigned part guide-halves (8, 8') form a rod guide tube adapted to the diameter of the material rod (15) by raising the upper support elements (7'), twisting the lower and upper support elements (7, 7') and re-lowering the upper support elements (7'), and, accordingly, the holding fixture (40) of the moulded element (36), which holding fixture supports the suitable material slide (30), is also brought into the appropriate position of alignment with the rod guide tube, and in that, when the support elements (7, 7') are brought to bear against each other, the assigned material slide (30) is automatically coupled to the transport means (10).

18. Device according to one of Claims 14 to 17, characterised in that the moulded element (36) supporting the holding fixtures (40) is mounted in a way corresponding to the lower support elements (7) between brackets (4) and in that the moulded element (36) is synchronously rotatably coupled to the support elements (7, 7'), in particular via jointly driven chain drives (42).

19. Device according to Claim 9 and 15, characterised in that the lower support element (7) and the correspondingly configured moulded element (36) respectively exhibit in their guide recesses (9) a groove (44) for the lower free end of the dog (33).

20. Device according to Claim 15, characterised in that the material slides (30), in their rest position in the material slide magazine (35), are secured in position by a spring-loaded indexing bolt (39) which locks fast in a recess of the material slide (30).

## Revendications

1. Dispositif d'amenée de barres à une machine-outil comportant plusieurs tubes de guidage de barres pour une barre (15) à usiner qui est amenée, à partir d'un magasin (16), dans l'un des tubes de guidage de barres, chaque tube de guidage de barres étant formé par deux moitiés de guidage (8, 8') de section transversale à peu près semi-circulaire et dans lequel, pour la mise en place de la barre (15), une première moitié de guidage (8') peut être soulevée de la deuxième moitié de guidage (8) et dans lequel en outre la deuxième moitié de guidage (8) est placée sur le pourtour extérieur d'un premier corps de support (7) symétrique en rotation, tournant autour d'un axe de rotation (6), et la magasin (16) est placé parallèlement, au-dessous, à côté ou au-dessus des moitiés de guidage, caractérisé en ce qu'il est prévu un deuxième corps de support (7') symétrique en rotation dont l'axe longitudinal s'étend parallèlement à celui du premier corps de support (7), à une certaine distance au-dessus de celui-ci et en ce que les deux corps de support (7, 7') comportent chacun plusieurs moitiés de guidage (8, 8') s'étendant dans la direction de l'axe longitudinal, placées sur le pourtour, de diamètre différent, le nombre et les sections transversales des moitiés de guidage (8, 8') sur les deux corps de support (7, 7') étant les mêmes, en ce qu'en outre un corps de support (7') peut être soulevé de l'autre corps de support (7), et une fois soulevés les corps de support (7, 7') peuvent tourner l'un par rapport à l'autre de manière synchrone et de préférence en sens opposé, ce qui fait que lorsque des moitiés de guidage (8, 8') présélectionnées, de même diamètre, s'appliquent l'une contre l'autre, il est formé un tube de guidage de barres pour un diamètre de barre sélectionné.

2. Dispositif selon la revendication 1, caractérisé en ce que pour former un tube de guidage de barres plus long, les deux moitiés de guidage sont constituées, dans leur longueur, de plusieurs moitiés partielles (8, 8'), alignées l'une derrière l'autre et espacées, par juxtaposition de plusieurs corps de support (7, 7').

3. Dispositif selon la revendication 1 ou 2, caractérisé en ce que les deux corps de support (7, 7') présentent une section transversale polygonale, de préférence hexagonale ou octogonale et en ce qu'il est prévu, sur chacune des surfaces polygonales, une moitié de guidage partielle (8, 8') de section transversale à peu près semi-circulaire, mais de rayon différent.

4. Dispositif selon l'une des revendications 1 à 3, caractérisé en ce que plusieurs corps de support (7, 7') alignés sont placés fixes en rotation, espacés, sur deux arbres d'appui (6, 13) de préférence continus, s'étendant dans l'axe longitudinal du corps de support, les corps de support (7, 7') se trouvant sur les arbres d'appui (6, 13) respectifs pouvant tourner conjointement et les corps de support (7, 7') pouvant être soulevés l'un de l'autre, par variation de l'écartement entre les arbres d'appui.

5. Dispositif selon la revendication 4, caractérisé en ce que les arbres d'appui (6, 13) sont supportés en plusieurs points, le supportage s'effectuant dans les espaces intermédiaires compris entre les corps de support (7, 7').

6. Dispositif selon la revendication 4 ou 5, caractérisé en ce qu'un arbre d'appui (6) est logé de manière à ne pouvoir coulisser axialement ni radialement, dans des points d'appui d'au moins deux consoles (4), et l'autre arbre d'appui (13) peut être soulevé et logé de manière à ne pouvoir coulisser axialement ni radialement, dans des points d'appui, à l'extrémité d'au moins deux bras de levage ou de pivotement (11) et en ce que les bras de levage ou de pivotement (11) sont montés pivotants chacun sur une console (3) et sont déplaçables conjointement, de préférence par des vérins (12) hydrauliques ou pneumatiques.

7. Dispositif selon l'une des revendications 4 a 6, caractérisé en ce que pour former un dispositif pour des barres (15) plus longues, il est prévu un support longitudinal (12) sur lequel sont placées plusieurs consoles (3, 4) pour le supportage et le déplacement des arbres d'appui (6, 13), ceux-ci comportant chacun plusieurs corps de support (7, 7') disposés l'un derrière l'autre.

8. Dispositif selon la revendication 7, caractérisé en ce que le support longitudinal (2) avec les consoles (3, 4), les vérins (12, 27) et les corps de support (7, 7'), ainsi qu'au moins une partie du magasin (16) avec les consoles correspondantes (5), sont placés dans un bac de collecte de lubrifiant.

9. Dispositif selon l'une des revendications 1 à 8, caractérisé en ce que parallèlement aux moitiés de guidage partielles (8, 8') de section transversale semi-circulaire, il est prévu chaque fois un évidement de guidage (9, 9') pour un moyen de transport (10) flexible, et en ce que le moyen de transport (10) comporte un entraîneur (33) qui peut être automatiquement accouplé et désaccouplé avec un pousseur de matière (30) passant dans le tube de guidage de barres, pour l'avance des barres (15).

10. Dispositif selon la revendication 9, caractérisé en ce que le moyen de transport (10) peut être soulevé des corps de support (7) inférieurs, par un dispositif de levage, en ce que le moyen de transport (10) est guidé à cet effet dans des tubes (32) fendus qui sont prévus à l'extrémité de bras de guidage (14) creux, espacés l'un de l'autre, qui servent en même temps d'alimentation de lubrifiant, en ce qu'il est prévu en outre au moins deux leviers (29) à double bras dont une extrémité est reliée à un vérin (27) et dont l'autre extrémité porte ou donne un bras de guidage (14), et en ce que les leviers (29) à double bras sont montés pivotants en particulier sur les consoles (3).

11. Dispositif selon l'une des revendications 1 à 10, caractérisé en ce que les corps de support (7, 7') sont en matière synthétique et en ce que les corps de support (7, 7') présentent chacun une longueur d'environ 60 cm.

**12.** Dispositif selon l'une des revendications 1 à 11, caractérisé en ce que le magasin (16) comporte au moins deux bras de pose (17) parallèles et espacés l'un de l'autre, en ce que les bras de pose (17) sont déplaçables chacun par un excentrique (18), par l'intermédiaire d'un arbre d'entraînement (26) commun, en ce qu'en outre chaque bras de pose (17) est guidé coulissant sur un galet de guidage (19) monté à peu près au milieu entre les corps de support (7) inférieurs et l'excentrique (18), et en ce que les bras de pose (17) peuvent passer, avec leurs extrémités logeant une barre (15), frontalement devant les corps de support (7) inférieurs, dans un mouvement à peu près circulaire et en ce qu'ainsi une barre (15) peut être posée à partir du haut dans la moitié de guidage partielle (8) inférieure.

**13.** Dispositif selon la revendication 12, caractérisé en ce que le magasin (16) comporte une surface de magasin (21) inclinée pour plusieurs barres (15) avec une butée terminale (22) pour la barre (15) la plus basse, en ce qu'au moins deux butées terminales (22) individuelles sont prévues dans la région des bras de pose (17), et en ce que ces butées terminales (22) sont réglables pour s'adapter à différents diamètres de barre, parallèlement à la surface de magasin (21).

**14.** Dispositif selon l'une des revendications 1 à 13, caractérisé en ce que dans le prolongement du tube de guidage de barres, formé par les moitiés de guidage partielles (8, 8'), il est prévu un magasin poussoir de matière (35) avec des poussoirs (30) pour l'avance de barres de matière (15) de diamètre différent, et en ce que dans le magasin poussoir de matière (35) il est prévu un nombre de poussoirs (30) correspondant au nombre des moitiés de guidage (8, 8') d'un corps de support (7, 7').

**15.** Dispositif selon la revendication 14, caractérisé en ce que le magasin poussoir de matière (35) comporte un corps façonné (36), correspondant au corps de support (7) inférieur, avec section transversale polygonale, en ce que sur chaque surface polygonale il est prévu un logement (40) aligné avec la moitié de guidage partielle (8) respective, pour un poussoir de matière (30) et en ce que le logement (40) respectif est formé par une moitié de guidage de poussoir (37) de section transversale à peu près semi-circulaire et par au moins un organe de maintien (38, 38'), une fente (41) étant prévue en particulier entre la moitié de guidage de poussoir (37) et l'organe de maintien (38, 38'), pour une languette de tôle (31) du poussoir de matière (30).

**16.** Dispositif selon la revendication 15, caractérisé en ce que la languette de tôle (31) du poussoir de matière (30) coopérant avec la barre (15) à déplacer de façon rectiligne, peut être amenée en prise avec le moyen de transport (10), l'engagement se produisant par un dispositif à découpe et partie saillante, formé en particulier par une découpe dans un maillon de chaîne ou un entraîneur (33) du moyen de transport (10) et une partie saillante de la languette de tôle (31) ou inversement.

**17.** Dispositif selon l'une des revendications 14 à 16, caractérisé en ce que pour chaque moitié de guidage partielle (8) du corps de support (7) inférieur, il est prévu sur le corps façonné (36) un poussoir de matière (30) adapté au diamètre de la barre (15) à transporter, en ce que dans le cas d'un changement de diamètre de la barre (15) à transporter, des moitiés de guidage partielles (8, 8') correspondant à des diamètres forment un tube de guidage de barres adapté au diamètre de la barre (15), par soulèvement des corps de support (7') supérieurs, par rotation des corps de support inférieurs et supérieurs (7, 7') et abaissement des corps de support supérieurs (7'), et en conséquence aussi, le logement (40) portant le poussoir de matière (30) adapté du corps façonné (36), est amené dans la position alignée correspondante avec le tube de guidage de barres, et en ce que le poussoir de matière (30) correspondant est automatiquement accouplé avec le moyen de transport (10), lorsque les corps de support (7, 7') s'appliquent l'un contre l'autre.

**18.** Dispositif selon l'une des revendications 14 à 17, caractérisé en ce que le corps façonné (36) portant les logements (40) est monté, comme les corps de support inférieurs (7), entre des consoles (4), et en ce que le corps façonné (36) avec les corps de support (7, 7') est accouplé en rotation de manière synchrone, en particulier par des mécanismes à chaîne (42) entraînés conjointement.

**19.** Dispositif selon les revendications 9 et 15, caractérisé en ce que les corps de support inférieurs (7) et le corps façonné (36) conçu en conséquence présentent chacun, dans leurs découpes de guidage (9), une rainure (44) pour l'extrémité libre inférieure de l'entraîneur (33).

**20.** Dispositif selon la revendication 15, caractérisé en ce que les poussoirs de matière (30) sont bloqués dans leur position de repos ou dans la magasin pousseur de matière (35), par une tige d'arrêt (39) s'accrochant dans un évidement du poussoir de matière (30), sous l'action d'un ressort.

FIG.1

FIG. 2

FIG. 3

FIG. 4

EP 0 212 077 B1

FIG.5

16

FIG. 6